(19) Europäisches Patentamt
European Patent Office
Office européen des brevets

(11) Veröffentlichungsnummer: **0 072 936**
**B1**

# (12) EUROPÄISCHE PATENTSCHRIFT

(45) Veröffentlichungstag der Patentschrift: **18.12.85**

(51) Int. Cl.⁴: **C 07 F 9/10**

(21) Anmeldenummer: **82106875.6**

(22) Anmeldetag: **30.07.82**

(54) **Neue O-alkyl-O-carbamoyl-glycero-phosphocholine und Verfahren zu ihrer Herstellung.**

(30) Priorität: **12.08.81 DE 3131782**
**12.08.81 DE 3131783**
**24.12.81 DE 3151377**
**24.12.81 DE 3151378**

(43) Veröffentlichungstag der Anmeldung:
**02.03.83 Patentblatt 83/9**

(45) Bekanntmachung des Hinweises auf die Patenterteilung:
**18.12.85 Patentblatt 85/51**

(84) Benannte Vertragsstaaten:
**AT BE CH DE FR GB IT LI LU NL SE**

(56) Entgegenhaltungen:
**EP - A - 0 035 375**

**Chemical Abstracts Band 93, Nr. 3, 21. Juli 1980 Columbus, Ohio, USA H. KODAMA et al. "Lysolecithin-type coumpounds" Seite 653, Spalte 2, Abstract Nr. 25917n**

(73) Patentinhaber: **A. Nattermann & Cie. GmbH, Nattermannallee 1, D-5000 Köln 30 (DE)**

(72) Erfinder: **Lautenschläger, Hans-Heiner, Dr., Neusser Gasse 50, D-5024 Pulheim-Stommeln (DE)**
Erfinder: **Betzing, Hans, Dr., Heidestock 7, D-5014 Kerpen-Horrem (DE)**
Erfinder: **Prop, Gerrit, Dr., Mohnblumenweg 25, D-5024 Pulheim (DE)**
Erfinder: **Zierenberg, Ottfried, Dr., Zum Dammfeld 45, D-5000 Köln 40 (DE)**

(74) Vertreter: **Redies, Bernd, Dr. rer. nat., COHAUSZ & FLORACK Patentanwaltsbüro Schumannstrasse 97 Postfach 14 01 47, D-4000 Düsseldorf 1 (DE)**

**EP 0 072 936 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue O-Alkyl-O-carbamoylglycerophosphocholine und Verfahren zu ihrer Herstellung.

Die erfindungsgemässen Verbindungen entsprechen den allgemeinen Formeln I oder II

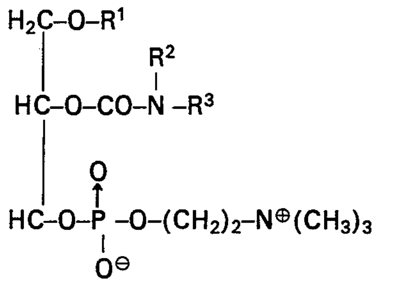

I

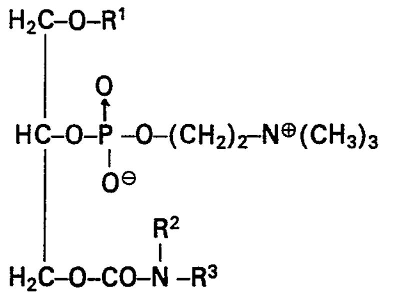

II

worin $R^1$ einen geradkettigen, gesättigten oder ungesättigten Kohlenwasserstoffrest mit 10–20 C-Atomen bedeutet, während $R^2$, $R^3$ gleich oder verschieden sein können und einen geradkettigen oder verzweigten, gesättigten oder ungesättigten Kohlenwasserstoffrest mit 1–20 C-Atomen oder ein Wasserstoffatom bedeuten, wobei $R^2 = R^3 =$ Wasserstoff ausgeschlossen ist.

In der JP-A-55 2636 ist eine Verbindung der Formel I beschrieben, worin $R^1$ eine Methylgruppe und $R^2$ und $R^3$ beide Wasserstoff sind. Diese Verbindung, neben anderen beschriebenen Verbindungen soll die Vermehrung von Tumorzellen verhindern und antimikrobielle Wirksamkeit besitzen. Diejenigen Verbindungen der Formel I und II, in denen $R^2$ und $R^3$ Wasserstoff darstellen, sind von der vorliegenden Erfindung ausgeschlossen. Auch haben die Verbindungen der vorliegenden Erfindung von diesen Eigenschaften völlig andersartige pharmakologische Eigenschaften, wie nachfolgend ausgeführt.

Verbindungen gemäss der Erfindung sind beispielsweise:

1-O-Hexadecyl-2-O-methylcarbamoyl-gylcero-3-phosphocholin,
2-O-Ethylcarbamoyl-1-O-hexadecyl-glycero-3-phosphocholin,
1-O-Hexadecyl-2-O-propylcarbamoyl-glycero-3-phosphocholin,
1-O-Hexadecyl-2-O-isopropylcarbamoyl-glycero-3-phosphocholin,
2-O-Butylcarbamoyl-1-O-hexadecyl-glycero-3-phosphocholin,
1-O-Hexadecyl-2-O-pentylcarbamoyl-glycero-3-phosphocholin,
1-O-Hexadecyl-2-O-hexylcarbamoyl-glycero-3-phosphocholin,
2-O-Methylcarbamoyl-1-O-octadecyl-glycero-3-phosphocholin,
2-O-Ethylcarbamoyl-1-O-octadecyl-glycero-3-phosphocholin,
1-O-Octadecyl-2-O-propylcarbamoyl-glycero-3-phosphocholin,
2-O-Isopropylcarbamoyl-1-O-octadecyl-glycero-3-phosphocholin,
2-O-Butylcarbamoyl-1-O-octadecyl-glycero-3-phosphocholin,
1-O-Octadecyl-2-O-pentylcarbamoyl-glycero-3-phosphocholin,
2-O-Hexylcarbamoyl-1-O-octadecyl-glycero-3-phosphocholin,
1-O-Hexadecyl-3-O-methylcarbamoyl-glycero-2-phosphocholin,
3-O-Ethylcarbamoyl-1-O-hexadecyl-glycero-2-phosphocholin,
1-O-Hexadecyl-3-O-propylcarbamoyl-glycero-2-phosphocholin,
1-O-Hexadecyl-3-O-isopropylcarbamoyl-glycero-2-phosphocholin,
3-O-Butylcarbamoyl-1-O-hexadecyl-glycero-2-phosphocholin,
1-O-Hexadecyl-3-O-pentylcarbamoyl-glycero-2-phosphocholin,
1-O-Hexadecyl-3-O-hexylcarbamoyl-glycero-2-phosphocholin,
3-O-Methylcarbamoyl-1-O-octadecyl-glycero-2-phosphocholin,
3-O-Ethylcarbamoyl-1-O-octadecyl-glycero-2-phosphocholin,
1-O-Octadecyl-3-O-propylcarbamoyl-glycero-2-phosphocholin,
3-O-Isopropylcarbamoyl-1-O-octadecyl-glycero-2-phosphocholin,
3-O-Butylcarbamoyl-1-O-octadecyl-glycero-2-phosphocholin,
1-O-Octadecyl-3-O-pentylcarbamoyl-glycero-2-phosphocholin,
3-O-Hexylcarbamoyl-1-O-octadecyl-glycero-2-phosphocholin,
3-O-Methylcarbamoyl-1-O-oleyl-glycero-2-phosphocholin,
3-O-Ethylcarbamoyl-1-O-linolyl-glycero-2-phosphocholin,
3-O-Dimethylcarbamoyl-1-O-octadecyl-glycero-2-phosphocholin,
3-O-Dimethylcarbamoyl-1-O-hexadecyl-glycero-2-phosphocholin,

2-O-Decylcarbamoyl-1-O-hexadecyl-glycero-3-phosphocholin,
1-O-Hexadecyl-2-O-undecylcarbamoyl-glycero-3-phosphocholin,
2-O-Dodecylcarbamoyl-1-O-hexadecyl-glycero-3-phosphocholin,
1-O-Hexadecyl-2-O-tetradecylcarbamoyl-glycero-3-phosphocholin,
1-O-Hexadecyl-2-O-hexadecylcarbamoyl-glycero-3-phosphocholin,
1-O-Hexadecyl-2-O-octadecylcarbamoyl-glycero-3-phosphocholin,

2-O-Eicosylcarbamoyl-1-O-hexadecyl-glycero-3-phosphocholin,
2-O-Decylcarbamoyl-1-O-octadecyl-glycero-3-phosphocholin,
1-O-Octadecyl-2-O-undecylcarbamoyl-glycero-3-phosphocholin,
2-O-Dodecylcarbamoyl-1-O-octadecyl-glycero-3-phosphocholin,
1-O-Octadecyl-2-O-tetradecylcarbamoyl-glycero-3-phosphocholin,
2-O-Hexadecylcarbamoyl-1-O-octadecyl-glycero-3-phosphocholin,
1-O-Octadecyl-2-O-octadecylcarbamoyl-glycero-3-phosphocholin,
2-O-Eicosylcarbamoyl-1-O-octadecyl-glycero-3-phosphocholin,
3-O-Decylcarbamoyl-1-O-hexadecyl-glycero-2-phosphocholin,
1-O-Hexadecyl-3-O-undecylcarbamoyl-glycero-2-phosphocholin,
3-O-Dodecylcarbamoyl-1-O-hexadecyl-glycero-2-phosphocholin,
1-O-Hexadecyl-3-O-tetradecylcarbamoyl-glycero-2-phosphocholin,
1-O-Hexadecyl-3-O-hexadecylcarbamoyl-glycero-2-phosphocholin,
1-O-Hexadecyl-3-O-octadecylcarbamoyl-glycero-2-phosphocholin,
3-O-Hexadecylcarbamoyl-1-O-oleyl-glycero-2-phosphocholin,
3-O-Hexadecylcarbamoyl-1-O-linolyl-glycero-2-phosphocholin,
3-O-Hexadecylcarbamoyl-1-O-octadecyl-glycero-2-phosphocholin,
1-O-Octadecyl-1-O-octadecylcarbamoyl-glycero-2-phosphocholin,
3-O-Eicosylcarbamoyl-1-O-octadecyl-glycero-2-phosphocholin.

Die erfindungsgemässen Verbindungen besitzen wertvolle, pharmakologische Eigenschaften und sind daher zur Verwendung als Wirkstoff in Arzneimitteln geeignet.

Von den angeführten, erfindungsgemässen Verbindungen werden Substanzen, wie z.B. 1-O-Hexadecyl-2-O-methylcarbamoyl- glycero-3-phosphocholin oder 2-O-Ethylcarbamoyl-1-O-hexadecyl-glycero- 3-phosphocholin besonders bevorzugt, da sie eine sehr starke antihypertensive Wirkung sowie eine günstige Beeinflussung rheumatischer Krankheiten zeigen. Die genannten Verbindungen können daher zur Behandlung des Hochdrucks, verschiedener rheumatischer und einiger atherosklerotischer Krankheitsbilder am Menschen genutzt werden.

Daneben werden Verbindungen, wie z.B. 1-O-Hexadecyl-2-O-hexydecylcarbamoyl- glycero-3-phosphocholin oder 1-O-Hexadecyl-3-O-hexadecylcarbamoyl- glycero-2-phosphocholin bevorzugt, da sie gegenüber den bisher in der Liposomentechnik verwendeten, natürlichen oder synthetischen 1,2-Diacylglycero-3-phosphocholinen (z.B. DE-OS 27 12 031) deutliche Vorteile aufweisen, da sie im Gegensatz zu diesen Phospholipiden gegen Phospholipase $A_2$ beständig sind und damit eine bessere Vermittlung des eingeschlossenen Wirkstoffes an den Wirkungsort ermöglichen.

Die erfindungsgemässen Substanzen werden durch Reaktion der Lysoverbindungen III bzw. IV, worin $R^1$ die in Anspruch 1 genannte Bedeutung hat, mit den entsprechenden Alkylisocyanaten der Formel VI hergestellt

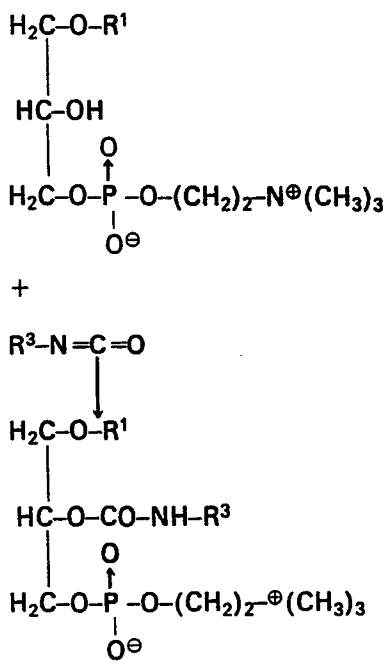

III

VI

I

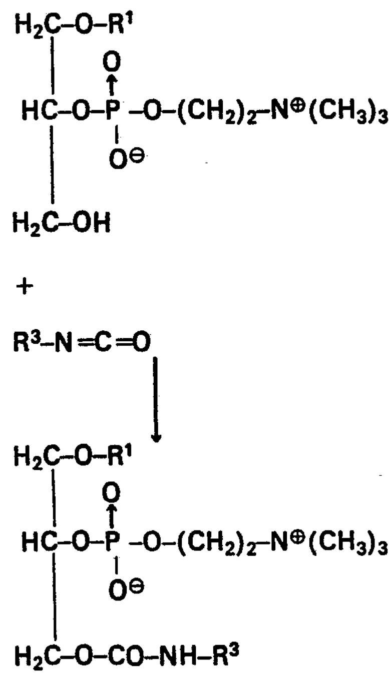

IV

VI

II

Die Reaktion wird zweckmässig in organischen aprotischen Lösungsmitteln, wie z.B. Chloroform, Aceton, Dimethylformamid bzw. deren Mischungen, gegebenenfalls unter Anwendung eines Katalysators, insbesondere einer Lewis-Base, wie z.B. Triethylamin, Pyridin, Dimethylaminopyridin, Dimethylformamid, bei Temperaturen zwischen 0°

und 100 °C, vorzugsweise bei 40°–60 °C, durchgeführt.

Die Isocyanate können auch in Form ihrer Imidazolide mit der allgemeinen Formel VII

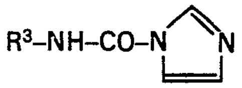 VII

unter den obengenannten Bedingungen eingesetzt werden, da sich die Imidazolide wie freie Isocyanate verhalten (vergl. H.A. Staab und W. Rohr, in: Neuere Methoden der präparativen organischen Chemie, S. 79, Weinheim 1967).

Als Ausgangsverbindungen III bzw. IV kommen z.B. in Frage:
1-O-Decyl-glycero-3- phosphocholin,
1-O-Undecyl-1-glycero-3- phosphocholin,
1-O-Dodecyl-glycero-3- phosphocholin,
1-O-Tridecyl-glycero-3- phosphocholin,
1-O-Tetradecyl-glycero-3- phosphocholin,
1-O-Pentadecyl-glycero-3- phosphocholin,
1-O-Hexadecyl-glycero-3- phosphocholin,
1-O-Heptadecyl-glycero- 3-phosphocholin,
1-O-Octadecyl-glycero- 3-phosphocholin,
1-O-Nonadecyl-glycero-3-phosphocholin,
1-O-Eicosyl-glycero-3- phosphocholin,
1-O-Decyl-glycero-2- phosphocholin,
1-O-Undecyl-glycero-2- phosphocholin,
1-O-Dodecyl-glycero-2- phosphocholin,
1-O-Tridecyl-glycero-2- phosphocholin,
1-O-Tetradecyl-glycero-2- phosphocholin,
1-O-Pentadecyl-glycero-2- phosphocholin,
1-O-Hexadecyl-glycero-2- phosphocholin,
1-O-Heptadecyl-glycero-2- phosphocholin,
1-O-Octadecyl-glycero-2- phosphocholin,
1-O-Oleyl-glycero-2- phosphocholin,
1-O-Linolyl-glycero-2- phosphocholin,
1-O-Nonadecyl-glycero-2- phosphocholin,
1-O-Eicosyl-glycero-2- phosphocholin,
wobei die Lysoverbindungen in der natürlichen sn-Form, in Form der Spiegelbildisomeren oder als Racemate eingesetzt werden können.

Als Ausgangsverbindungen VI kommen z.B. in Frage: Methylisocyanat, Ethylisocyanat, Propylisocyanat, Isopropylisocyanat, Butylisocyanat, Pentylisocyanat, Hexylisocyanat, Decylisocyanat, Undecylisocyanat, Dodecylisocyanat, Tridecylisocyanat, Tetradecylisocyanat, Pentadecylisocyanat, Hexadecylisocyanat, Octadecylisocyanat, Nonadecylisocyanat, Eicosylisocyanat.

Die als Ausgangsverbindungen eingesetzten 1-O-Alkyl-3- phosphocholine III sind entweder durch Organextraktion (z.B. M. Blank et al., Biochemical and Biophysical Research Communications 90 (4), 1194 ff (1979) zugänglich oder lassen sich nach den üblichen Verfahren, z.B. durch enzymatische Spaltung (Phospholipase $A_2$) oder milde alkalische Hydrolyse aus den entsprechenden 2-O-Acyl-1-O-alkyl-glycero- 3-phosphocholinen synthetisieren.

Die als Ausgangsverbindungen verwendeten 1-O-Alkyl-glycero-2- phosphocholine IV können durch milde alkalische Hydrolyse aus O-Acyl-O-alkyl- glycero-2- phosphocholinen erhalten werden, die sich aus Glycerinderivaten der Formel VIII

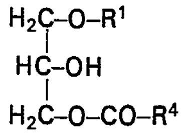 VIII

in der $R^1$ die in Anspruch 1 angegebene Bedeutung hat, und $R^4$ einen geradkettigen oder verzweigten Kohlenwasserstoffrest mit 1–6 C-Atomen bedeutet, nach bekannten Phosphorylierungsverfahren, wie z.B. durch Umsetzen mit β-Bromethylphosphorsäuredichlorid in Gegenwart einer Base und nachfolgendes Behandeln mit Trimethylamin herstellen lassen (vergl. z.B. T-Muramatsu et al., Chemistry and Physics of Lipids 29, 121–127 (1981)).

Die Glycerinderivate VIII sind ihrerseits aus 2,3-Epoxypropylethern durch Umsetzung mit den entsprechenden Säuren $R^4COOH$ analog dem von U. Zeidler, Fette, Seifen, Anstrichmittel 83 (2), 57 (1981) für Esteralkohole beschriebenen Verfahren zugänglich. 2,3-Epoxyether erhält man aus Epichlorhydrinen und den entsprechenden Alkoholen $R^1OH$ am besten durch Phasen-Transferkatalyse nach literaturbekannten Verfahren. Andererseits lassen sich Glycerinderivate VIII auch durch Isomerisierung aus den entsprechenden 2-O-Acylglycerinethern IX

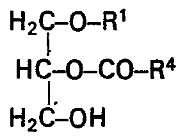 IX

z.B. durch einfaches Erwärmen gewinnen. Die Synthese der 2-O-Acyl-glycerinether wird von K. Mangold, Angew. Chemie 91, 550–560 (1979) beschrieben.

Aus den genannten Lysoverbindungen IV lassen sich durch Umsetzung mit Dialkylcarbamidsäurehalogeniden, insbesondere mit Chloriden der Formel V

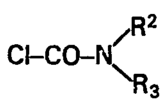 V

wie z.B.

N,N-Dimethylcarbamidsäurechlorid, N-Ethyl-N-methylcarbamidsäurechloird, N,N-Diethylcarbamidsäurechlorid, N-Methyl-N-propylcarbamidsäurechlorid, N,N-Dipropylcarbamidsäurechlorid, in indifferenten organischen Lösungsmitteln, wie z.B. Chloroform, sowie Lösungsmittelgemischen, gegebenenfalls unter Zusatz von üblichen Basen, wie z.B. tertiären Aminen, Metalloxiden, Metallcarbonaten, 1-O-Alkyl-3-O-dialkylcarbamoyl-glycero-2- phosphocholine herstellen.

Die Herstellung der erfindungsgemässen Verbindungen wird durch die folgenden Beispiele näher erläutert.

Da sich die Verbindungen aufgrund ihrer wachsartigen Konsistenz nicht durch Schmelzpunkte charakterisieren lassen, sind die jeweiligen

IR-Daten sowie die Rf-Werte der Substanzen angegeben.

Die IR-Spektren wurden mit dem Gerät Perkin-Elmer 257 aufgenommen, wobei die Substanzen als Chloroformlösungen vermessen wurden.

Dünnschichtchromatographie: Kieselgel 60F–254, Fa. Merck, Laufmittel: Chloroform/Methanol/Wasser = 65/25/4 (V/V/V)

Beispiel 1

1-O-Hexadecyl-2-O-methylcarbamoyl- glycero- 3-phosphocholin. Eine Mischung aus 50 mg 1-O-Hexadecyl- glycero -3- phosphocholin, 24 mg Methylisocyanat, 5 ml absol. Chloroform und 0,1 ml Dimethylformamid wird bei 40–60 °C gerührt, bis das Lysophospholipid dünnschichtchromatographisch nicht mehr nachweisbar ist (Rf: 0,23). Die Lösungsmittel und überschüssiges Alkylisocyanat werden im Vakuum entfernt und der Rückstand durch Säulenchromatographie (Kieselgel/Chloroform/Methanol/Wasser) gereinigt.

Ausbeute: 41 mg, Rf: 0,26, IR: 1715 $cm^{-1}$

Analog dieser Vorschrift werden hergestellt:

Beispiel 2

2-O-Ethylcarbamoyl-1-O-hexadecyl-glycero-3-phosphocholin aus

50 mg 1-O-Hexadecyl-glycero-3-

28 mg Ethylisocyanat

in 5 ml Chloroform und 0,1 ml Dimethylformamid.

Ausbeute: 47 mg, Rf: 0,30, IR: 1710 $cm^{-1}$

Beispiel 3

1-O-Hexadecyl-2-O-propylcarbamoyl-glycero- 3-phosphocholin aus

50 mg 1-O-Hexadecyl-glycero-3- phosphocholin

34 mg Propylisocyanat

in 5 ml Chloroform und 0,1 ml Dimethylformamid.

Ausbeute: 38 mg, Rf: 0,34, IR: 1715 $cm^{-1}$

Beispiel 4

1-O-Hexadecyl-2-O-isopropylcarbamoyl-glycero-3- phosphocholin aus

50 mg 1-O-Hexadecyl-glycero-3- phosphocholin

34 mg Isopropylisocyanat

in 5 ml Chloroform und 01 ml Dimethylformamid.

Ausbeute: 35 mg, Rf: 0,35, IR: 1715 $cm^{-1}$

Beispiel 5

2-O-Butylcarbamoyl-1-O-hexadecyl-glycero-3-phosphocholin aus

50 mg 1-O-Hexadecyl-glycero-3- phosphocholin

40 mg Butylisocyanat

in 5 ml Chloroform und 0,1 ml Dimethylformamid.

Ausbeute: 40 mg, Rf: 0,37, IR: 1712 $cm^{-1}$

Analog den Beispielen 1–5 werden hergestellt:

1-O-Hexadecyl-2-O-pentylcarbamoyl-glycero-3-phosphocholin,
1-O-Hexadecyl-2-O-hexylcarbamoyl-glycero-3-phosphocholin,
2-O-Methylcarbamoyl-1-O-octadecyl-glycero-3-phosphocholin,
2-O-Ethylcarbamoyl-1-O-octadecyl-glycero-3-phosphocholin,
1-O-Octadecyl-2-O-propylcarbamoyl-glycero-3-phosphocholin,
2-O-Isopropylcarbamoyl-1-O-octadecyl-glycero- 3-phosphocholin,
2-O-Butylcarbamoyl-1-O-octadecyl-glycero-3-phosphocholin,
1-O-Octadecyl-2-O-pentylcarbamoyl-glycero-3-phosphocholin,
2-O-Hexylcarbamoyl-1-O-octadecyl-glycero-3-phosphocholin.

Beispiel 6

1-O-Hexadecyl-3-O-methylcarbamoyl-glycero- 2-phosphocholin. Eine Mischung aus 50 mg 1-O-Hexadecyl-glycero-2- phosphocholin, 24 mg Methylisocyanat, 5 ml absol. Chloroform und 0,1 ml Dimethylformamid wird bei 40–60 °C gerührt, bis das Lysophospholipid dünnschichtchromatographisch nicht mehr nachweisbar ist (Rf: 0,23). Die Lösungsmittel und überschüssiges Methylisocyanat werden im Vakuum entfernt und der Rückstand durch Säulenchromatographie (Kieselgel/Chloroform/Methanol/Wasser) gereinigt.

Ausbeute: 45 mg, Rf: 0,26, IR: 1712 $cm^{-1}$

Analog dieser Vorschrift werden hergestellt:

Beispiel 7

3-O-Ethylcarbamoyl-1-O-hexadecyl-glycero-2- phosphocholin aus

50 mg 1-O-Hexadecyl-glycero-2- phosphocholin

28 mg Ethylisocyanat

in 5 ml Chloroform und 0,1 ml Dimethylformamid.

Ausbeute: 49 mg, Rf: 0,30, IR: 1715 $cm^{-1}$

Beispiel 8

1-O-Hexadecyl-3-O-propylcarbamoyl- glycero-2-phosphocholin aus

50 mg 1-O-Hexadecyl-glycero-2- phosphocholin

34 mg Propylisocyanat

in 5 ml Chloroform und 0,1 ml Dimethylformamid.

Ausbeute: 40 mg, Rf: 0,33, IR: 1710 $cm^{-1}$

Beispiel 9

1-O-Hexadecyl-3-O-isopropylcarbamoyl-glycero- 2-phosphocholin aus

50 mg 1-O-Hexadecyl-glycero-2- phosphocholin

34 mg Isopropylisocyanat

in 5 ml Chloroform und 0,1 ml Dimethylformamid.

Ausbeute: 30 mg, Rf: 0,34, IR: 1715 $cm^{-1}$

Beispiel 10

3-O-Butylcarbamoyl-1-O-hexadecyl-glycero-2-phosphocholin aus

50 mg 1-O-Hexadecyl-glycero-2- phosphocholin

40 mg Butylisocyanat

in 5 ml Chloroform und 0,1 ml Dimethylformamid.

Ausbeute: 35 mg, Rf: 0,37, IR: 1710 $cm^{-1}$

Beispiel 11

3-O-Methylcarbamoyl-1-O-octadecyl-glycero- 2-phosphocholin aus

50 mg 1-O-Octadecyl-glycero-2- phosphocholin

24 mg Methylisocyanat

in 5 ml Chloroform und 0,1 ml Dimethylformamid.

Ausbeute: 40 mg, Rf: 0,27, IR: 1715 $cm^{-1}$

Beispiel 12

3-O-Ethylcarbamoyl-1-O-octadecyl-glycero-2- phosphocholin aus

50 mg 1-O-Octadecyl-glycero-2- phosphocholin

28 mg Ethylisocyanat

in 5 ml Chloroform und 0,1 ml Dimethylformamid.

Ausbeute: 45 mg, Rf: 0,30, IR: 1712 $cm^{-1}$

Beispiel 13

1-O-Octadecyl-3-O-propylcarbamoyl- glycero- 2-phosphocholin aus

50 mg 1-O-Octadecyl-glycero-2- phosphocholin

34 mg Propylisocyanat

in 5 ml Chloroform und 0,1 ml Dimethylformamid.

Ausbeute: 35 mg, Rf: 0,34, IR: 1715 $cm^{-1}$

Beispiel 14

3-O-Isopropylcarbamoyl-1-O-octadecyl- glycero-2-phosphocholin aus

50 mg 1-O-Octadecyl-glycero-2- phosphocholin

34 mg Isopropylisocyanat

in 5 ml Chloroform und 0,1 ml Dimethylformamid.

Ausbeute: 32 mg, Rf: 0,34, IR: 1715 $cm^{-1}$

Beispiel 15

3-O-Butylcarbamoyl-3-O-octadecyl-glycero-2-phosphocholin aus

50 mg 1-O-Octadecyl-glycero-2-phosphocholin

40 mg Butylisocyanat

in 5 ml Chloroform und 0,1 ml Dimethylformamid.

Ausbeute: 38 mg, Rf: 0,38, IR: 1712 $cm^{-1}$

Beispiel 16

3-O- Dimethylcarbamoyl -1-O- octadecyl- glycero-2- phosphocholin. Eine Mischung aus 50 mg 1-O-Octadecyl-glycero-2- phosphocholin, 20 ml Dimethylcarbamidsäurechlorid und 55 mg Silbercarbonat in 5 ml Chloroform wird 24 Stunden bei 50 °C gerührt, das Lösungsmittel im Vakuum abgezogen und der Rückstand durch Säulenchromatographie (Kieselgel/Chloroform/Methanol/Wasser) gereinigt.

Ausbeute: 35 mg, Rf: 0,47

Analog dieser Vorschrift wird hergestellt:

Beispiel 17

3-O-Dimethylcarbamoyl-1-O-hexadecyl-glycero- 2-phosphocholin aus

50 mg 1-O-Hexadecyl-glycero- 2-phosphocholin

21 mg Dimethylcarbamidsäurechlorid

55 mg $Ag_2CO_3$

in 5 mlChloroform.

Ausbeute: 40 mg, Rf: 0,46

Analog den Beispielen 6–15 werden hergestellt:

1-O-Hexadecyl-3-O-pentylcarbamoyl-glycero-2-phosphocholin,
1-O-Hexadecyl-3-O-hexylcarbamoyl-glycero-2-phosphocholin,
1-O-Octadecyl-3-O-pentylcarbamoyl-glycero-2- phosphocholin,
3-O-Hexylcarbamoyl-1-O-octadecyl-1-glycero-2-phosphocholin,
1-O-Linolyl-3-O-methylcarbamoyl-glycero-2-phosphocholin,
3-O-Ethylcarbamoyl-1-O-linolyl-glycero-2-phosphocholin,
1-O-Linolyl-3-O-propylcarbamoyl-glycero-2-phosphocholin,
3-O-Butylcarbamoyl-1-O-linolyl-glycero-2-phosphocholin,
1-O-Linolyl-3-O-pentylcarbamoyl-glycero-2-phosphocholin,
3-O-Hexylcarbamoyl-1-O-linolyl-glycero-2-phosphocholin,
3-O-Methylcarbamoyl-1-O-oleyl-glycero-2-phosphocholin,
3-O-Ethylcarbamoyl-1-O-oleyl-glycero-2-phosphocholin,
1-O-Oleyl-3-O-propylcarbamoyl-glycero-2-phosphocholin,
3-O-Butylcarbamoyl-1-O-oleyl-glycero-2-phosphocholin,
1-O-Oleyl-3-O-pentylcarbamoyl-glycero-2-phosphocholin,
3-O-Hexylcarbamoyl-1-O-oleyl-glycero-2-phosphocholin.

Beispiel 18

1-O-Hexadecyl-2-O- hexadecylcarbamoyl-glycero-3- phosphocholin. Eine Mischung aus 50 mg 1-O-Hexadecyl-glycero-3- phosphocholin, 107 mg Hexadecylisocyanat, 5 ml Chloroform und 0,1 ml Dimethylformamid wird bei 60 °C gerührt (48 Stunden). Das überschüssige Alkylisocyanat wird durch Zugabe von wenig Wasser hydrolysiert und die Mischung im Vakuum weitgehend eingeengt. Der Rückstand wird durch präparative Dünnschichtchromatographie (Kieselgel/Chloroform/Methanol/Wasser = 65/25/4) gereinigt.

Ausbeute: 45 mg, Rf: 0,5, IR: 1710 $cm^{-1}$

Analog werden hergestellt:
1-O-Hexadecyl-2-O-octadecylcarbamoyl-glycero-3- phosphocholin,
2-O-Hexadecylcarbamoyl-1-O-octadecyl-glycero-3- phosphocholin,
1-O-Octadecyl-2-O-octadecylcarbamoyl-glycero- 3-phosphocholin,
2-O-Decylcarbamoyl-1-O-hexadecyl-glycero-3-phosphocholin,
1-O-Hexadecyl-2-O-undecylcarbamoyl-glycero-3- phosphocholin,
2-O-Dodecylcarbamoyl-1-O-hexadecyl-glycero-3- phosphocholin,
1-O-Hexadecyl-2-O-tetradecylcarbamoyl-glycero- 3-phosphocholin,
2-O-Eicosylcarbamoyl-1-O-hexadecyl-glycero-3- phosphocholin,
2-O-Decylcarbamoyl-1-O-octadecyl-glycero-3-phosphocholin,
1-O-Octadecyl-2-O-undecylcarbamoyl-glycero-3-phosphocholin,
2-O-Dodecylcarbamoyl-1-O-octadecyl-glycero-3- phosphocholin,
1-O-Octadecyl-2-O- tetradecylcarbamoyl-glycero- 3-phosphocholin,
2-O-Eicosylcarbamoyl-1-O-octadecyl-glycero-3-phosphocholin.

Beispiel 19

1-O-Hexadecyl-3-O-hexydecylcarbamoyl-glycero- 2-phosphocholin. Eine Mischung aus 50 mg 1-O-Hexadecyl-glycero-2-phosphocholin, 107 mg Hexadecylisocyanat, 5 ml Chloroform und 0,1 ml Dimethylformamid wird bei 60 °C gerührt (48 Stunden). Das überschüssige Alkylisocyanat wird durch Zugabe von wenig Wasser hydrolysiert und die Mischung im Vakuum weitgehend eingeengt. Der Rückstand wird durch präparative Dünnschichtchromatographie (Kieselgel/Chloroform/Methanol/Wasser = 65/25/4) gereinigt.

Ausbeute: 52 mg, Rf: 0,5, IR: 1712 $cm^{-1}$

Analog dieser Vorschrift werden hergestellt:

Beispiel 20

1-O-Hexadecyl-3-O-octadecylcarbamoyl-glycero- 2-phosphocholin aus
50 mg 1-O-Hexadecyl-glycero-2- phosphocholin
120 mg Octadecylisocyanat
in 5 ml Chloroform und 0,1 ml Dimethylformamid.

Ausbeute: 61 mg, Rf: 0,5, IR: 1715 $cm^{-1}$

Beispiel 21

3-O-Hexadecylcarbamoyl-1-O-octadecyl-glycero- 2-phosphocholin aus
50 mg 1-O-Octadecyl-glycero-2- phosphocholin
100 mg Hexadecylisocyanat
in 5 ml Chloroform und 0,1 ml Dimethylformamid.

Ausbeute: 48 mg, Rf: 0,51, IR: 1710 $cm^{-1}$

Beispiel 22

1-O-Octadecyl-3-O-octadecylcarbamoyl-glycero- 2-phosphocholin aus
50 mg 1-O-Octadecyl-glycero-2- phosphocholin
120 mg Octadecylisocyanat
in 5 ml Chloroform und 0,1 ml Dimethylformamid.

Ausbeute: 54 mg, Rf: 0,52, IR: 1712 $cm^{-1}$

Analog den Beispielen 19–22 werden hergestellt:
3-O-Decylcarbamoyl-1-O-hexadecyl-glycero-2-phosphocholin,
1-O-Hexadecyl-3-O-undecylcarbamoyl-glycero-2- phosphocholin,
3-O-Dodecylcarbamoyl-1-O-hexadecyl-glycero-2- phosphocholin,
1-O-Hexadecyl-3-O-tetradecylcarbamoyl-glycero- 2-phosphocholin,
3-O-Eicosylcarbarmoyl-1-O-hexadecyl-glycero-2- phosphocholin,
1-O-Decylcarbamoyl-3-O-octadecyl-glycero-2-phosphocholin,
1-O-Octadecyl-3-O-undecylcarbamoyl-glycero-2- phosphocholin,
3-O-Dodecylcarbamoyl-1-O-octadecyl-glycero-2- phosphocholin,
1-O-Octadecyl-3-O-tetradecylcarbamoyl-glycero-2- phosphocholin,
3-O-Eicosylcarbamoyl-1-O-octadecyl-glycero-2- phosphocholin,
3-O-Hexadecylcarbamoyl-1-O-oleyl-glycero-2-phosphocholin,
3-O-Hexadecylcarbamoyl-1-O-linolyl-2- phosphocholin.

**Patentansprüche für die Vertragsstaaten: BE, CH, DE, FR, GB, IT, LU, NL, SE, LI**

1. O-Alkyl-O-carbamoyl-glycero-phosphocholine der allgemeinen Formeln I oder II

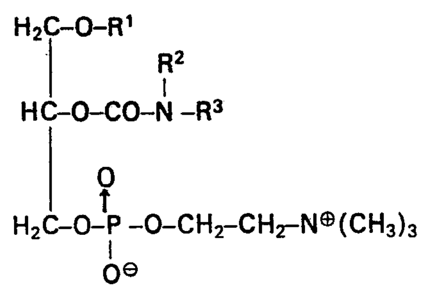

I

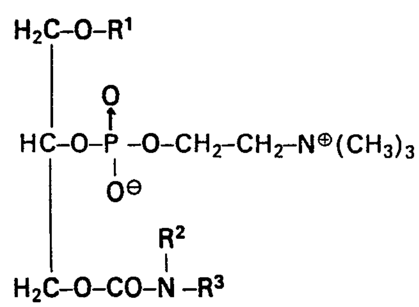

II

worin

$R^1$ einen geradkettigen, gesättigten oder ungesättigten Kohlenwasserstoffrest mit 10–20 C-Atomen bedeutet,

$R^2$, $R^3$ gleich oder verschieden sein können und einen geradkettigen oder verzweigten, gesättigten oder ungesättigten Kohlenwasserstoffrest mit 1–20 C-Atomen oder ein Wasserstoffatom bedeuten, wobei $R^2 = R^3$ = Wasserstoff ausgeschlossen ist.

2. 1-O-Alkyl-2-O-carbamoyl-glycero-3- phosphocholine der allgemeinen Formel I, worin $R^1$ einen geradkettigen, gesättigten Kohlenwasserstoffrest mit 10–20 C-Atomen, $R^2$ ein Wasserstoffatom und $R^3$ einen geradkettigen oder verzweigten Kohlenwasserstoffrest mit 1–9 C-Atomen bedeuten.

3. 1-O-Alkyl-2-O-carbamoyl-glycero-3- phosphocholine gemäss Anspruch 2, dadurch gekennzeichnet, dass $R^1$ ein geradkettiger, gesättigter Kohlenwasserstoffrest mit 16, 18 oder 20 C-Atomen ist, während $R^2$ ein Wasserstoffatom und $R^3$ einen Methyl-, Ethyl- oder Isopropylrest bedeuten.

4. 1-O-Alkyl-3-O-carbamoyl-glycero-2- phosphocholine der allgemeinen Formel II, worin $R^1$ ein geradkettiger, gesättigter oder ungesättigter Kohlenwasserstoffrest mit 10–20 C-Atomen ist, während $R^2$, $R^3$ gleich oder verschieden sein können und einen geradkettigen oder verzweigten Kohlenwasserstoffrest mit 1–6 C-Atomen oder ein Wasserstoffatom bedeuten, wobei $R^2 = R^3$ = Wasserstoff ausgeschlossen ist.

5. 1-O-Alkyl-3-O-carbamoyl-glycero-2- phosphocholine gemäss Anspruch 4, dadurch gekennzeichnet, dass $R^1$ ein geradkettiger, gesättigter Kohlenwasserstoffrest mit 16, 18 oder 20 C-Atomen ist, während $R^2$, $R^3$ gleich oder verschieden sein können und einen geradkettigen oder verzweigten Kohlenwasserstoffrest mit 1–3 C-Atomen oder ein Wasserstoffatom bedeuten, wobei $R^2 = R^3$ = Wasserstoff ausgeschlossen ist.

6. 1-O-Alkyl-3-O-carbamoyl-glycero-2- phosphocholine gemäss Anspruch 4, dadurch gekennzeichnet, dass $R^1$ ein einfach bzw. zweifach olefinisch ungesättigter, geradkettiger Kohlenwasserstoffrest mit 16, 18 oder 20 C-Atomen ist, während $R^2$, $R^3$ gleich oder verschieden sein können und einen geradkettigen oder verzweigten Kohlenwasserstoffrest mit 1–3 C-Atomen oder ein Wasserstoffatom bedeuten, wobei $R^2 = R^3$ = Wasserstoff ausgeschlossen ist.

7. 1-O-Alkyl-2-O-carbamoyl-glycero-3- phosphocholine der allgemeinen Formel I, worin $R^1$ einen geradkettigen, gesättigten Kohlenwasserstoffrest mit 10–20 C-Atomen, $R^2$ ein Wasserstoffatom und $R^3$ einen geradkettigen, gesättigten Kohlenwasserstoffrest mit 10–20 C-Atomen bedeuten, wobei $R^1$ und $R^3$ gleich oder verschieden sein können.

8. 1-O-Alkyl-2-O-carbamoyl-glycero-3- phosphocholine gemäss Anspruch 7, dadurch gekennzeichnet, dass $R^1$ und $R^3$ einen geradkettigen, gesättigten Kohlenwasserstoffrest mit 16 oder 18 C-Atomen bedeuten, wobei $R^1$ und $R^3$ gleich oder verschieden sein können.

9. 1-O-Alkyl-3-O-carbamoyl-glycero-2- phosphocholine der allgemeinen Formel II, worin $R^1$ ein geradkettiger, gesättigter oder ungesättigter Kohlenwasserstoffrest mit 10–20 C-Atomen, $R^2$ ein Wasserstoffatom und $R^3$ einen geradkettigen, gesättigten oder ungesättigten Kohlenwasserstoffrest mit 10–20 C-Atomen bedeuten, wobei $R^1$ und $R^3$ gleich oder verschieden sein können.

10. 1-O-Alkyl-3-O-carbamoyl-glycero-2- phosphocholine gemäss Anspruch 9, dadurch gekennzeichnet, dass $R^1$ und $R^3$ einen geradkettigen, gesättigten oder ungesättigten Kohlenwasserstoffrest mit 16 oder 18 C-Atomen bedeuten, wobei $R^1$ und $R^3$ gleich oder verschieden sein können.

11. Verfahren zur Herstellung von Verbindungen der Formel I gemäss den Ansprüchen 1, 2, 3, 7 und 8, dadurch gekennzeichnet, dass man Lysoverbindungen der allgemeinen Formel III

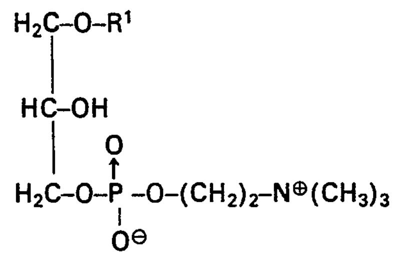

III

in der $R^1$ die in Formel I angegebene Bedeutung besitzt, in einem aprotischen organischen Lösungsmittel, gegebenenfalls unter Zusatz einer Lewis-Base als Katalysator mit dem entsprechenden Alkylisocyanat oder dessen Imidazolid umsetzt.

12. Verfahren zur Herstellung von Verbindungen der Formel II gemäss Ansprüchen 1, 4, 5, 6, 9 und 10, dadurch gekennzeichnet, dass man Lysoverbindungen der allgemeinen Formel IV

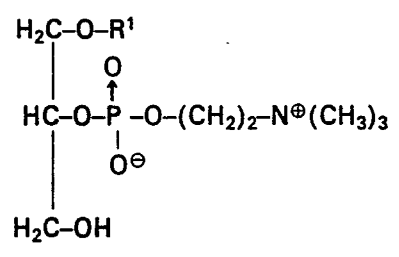

IV

in der $R^1$ die in Formel II angegebene Bedeutung besitzt, in einem aprotischen organischen Lösungsmittel, gegebenenfalls unter Zusatz einer Lewis-Base als Katalysator mit dem entsprechenden Alkylisocyanat oder dessen Imidazolid umsetzt.

13. Verfahren zur Herstellung von Verbindungen der Formel II gemäss den Ansprüchen 1, 4, 5 und 6, dadurch gekennzeichnet, dass man Lysoverbindungen der Formel IV in einem indifferenten, organischen Lösungsmittel, gegebenenfalls unter Zusatz eines Säureakzeptors, mit den entsprechenden Carbamidsäurechloriden der Formel V umsetzt,

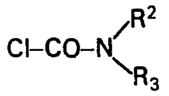

V

in der $R^2$ und $R^3$ die in Formel II angegebenen Bedeutungen besitzen.

**Patentansprüche für den Vertragsstaat: AT**

1. Verfahren zur Herstellung von Verbindungen der Formel I

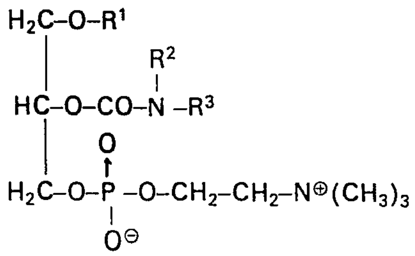

I

worin $R^1$ einen geradkettigen, gesättigten oder ungesättigten Kohlenwasserstoffrest mit 10 bis 20 C-Atomen bedeutet, $R^2$ und $R^3$ gleich oder verschieden sein können und einen geradkettigen oder verzweigten, gesättigten oder ungesättigten Kohlenwasserstoffrest mit 1 bis 20 C-Atomen oder ein Wasserstoffatom bedeuten, wobei $R^2$ = $R^3$ = Wasserstoff ausgeschlossen ist, dadurch gekennzeichnet, dass man Lysoverbindungen der allgemeinen Formel III

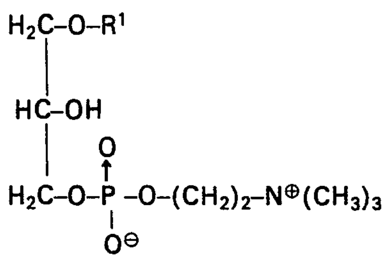

III

in der $R^1$ die in Anspruch 1 angegebene Bedeutung besitzt, in einem aprotischen organischen Lösungsmittel, gegebenenfalls unter Zusatz einer Lewis-Base als Katalysator mit einem Alkylisocyanat der Formel $R^3$–NCO oder dessen Imidazolid umsetzt.

2. Verfahren gemäss Anspruch 1, dadurch gekennzeichnet, dass $R^1$ einen geradkettigen gesättigten Kohlenwasserstoffrest mit 10 bis 20 C-Atomen und $R^3$ einen geradkettigen oder verzweigten Kohlenwasserstoffrest mit 1 bis 9 C-Atomen bedeuten.

3. Verfahren gemäss Anspruch 1, dadurch gekennzeichnet, dass $R^1$ ein geradkettiger, gesättigter Kohlenwasserstoffrest mit 16, 18 oder 20 C-Atomen ist, während $R^3$ einen Methyl-, Ethyl- oder Isopropylrest bedeuten.

4. Verfahren gemäss Anspruch 1, dadurch gekennzeichnet, dass $R^1$ einen geradkettigen, gesättigten Kohlenwasserstoffrest mit 10 bis 20 C-Atomen und $R^3$ einen geradkettigen, gesättigten Kohlenwasserstoffrest mit 10 bis 20 C-Atomen bedeuten, wobei $R^1$ und $R^3$ gleich oder verschieden sein können.

5. Verfahren gemäss Anspruch 1, dadurch gekennzeichnet, dass $R^1$ und $R^3$ einen geradkettigen, gesättigten Kohlenwasserstoffrest mit 16 oder 18 C-Atomen bedeuten, wobei $R^1$ und $R^3$ gleich oder verschieden sein können.

6. Verfahren zur Herstellung von Verbindungen der Formel II

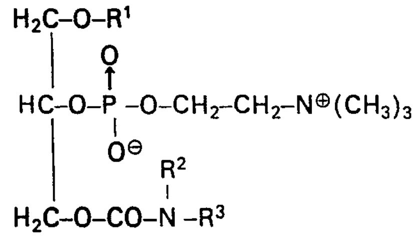

II

worin $R^1$ einen geradkettigen, gesättigten oder ungesättigten Kohlenwasserstoffrest mit 10 bis 20 C-Atomen bedeutet, $R^2$ und $R^3$ gleich oder verschieden sein können und einen geradkettigen oder verzweigten gesättigten oder ungesättigten Kohlenwasserstoffrest mit 1 bis 20 C-Atomen oder ein Wasserstoffatom bedeuten, wobei $R^2$ = $R^3$ = Wasserstoff ausgeschlossen ist, dadurch gekennzeichnet, dass man Lysoverbindungen der allgemeinen Formel IV

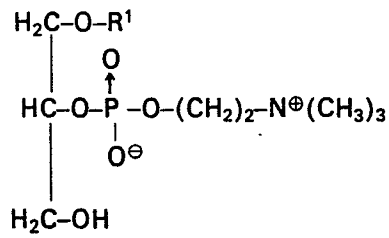

IV

in der $R^1$ die in Formel II angegebene Bedeutung besitzt, in einem aprotischen organischen Lösungsmittel, gegebenenfalls unter Zusatz einer Lewis-Base als Katalysator mit dem entsprechenden Alkylisocyanat der Formel $R^3$–NCO oder dessen Imidazolid umsetzt.

7. Verfahren zur Herstellung von Verbindungen der Formel II gemäss Anspruch 1, dadurch gekennzeichnet, dass man Lysoverbindungen der Formel IV in einem indifferenten organischen Lösungsmittel, gegebenenfalls unter Zusatz eines Säureakzeptors, mit den entsprechenden Carbamidsäurechloriden der Formel V umsetzt,

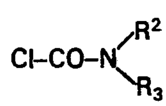

V

in der $R^2$ und $R^3$ die in Formel II angegebene Bedeutung besitzen.

8. Verfahren gemäss Anspruch 6 oder 7, dadurch gekennzeichnet, dass $R^1$ ein geradkettiger,

gesättigter oder ungesättigter Kohlenwasserstoffrest mit 10 bis 20 C-Atomen ist, während $R^2$ und $R^3$ gleich oder verschieden sein können und einen geradkettigen oder verzweigten Kohlenwasserstoffrest mit 1 bis 6 C-Atomen oder ein Wasserstoffatom bedeuten, wobei $R^2 = R^3$ = Wasserstoff ausgeschlossen ist.

9. Verfahren gemäss Anspruch 8, dadurch gekennzeichnet, dass $R^1$ ein geradkettiger, gesättigter Kohlenwasserstoffrest mit 16, 18 oder 20 C-Atomen ist, während $R^2$ und $R^3$ gleich oder verschieden sein können und einen geradkettigen oder verzweigten Kohlenwasserstoffrest mit 1 bis 3 C-Atomen oder ein Wasserstoffatom bedeuten, wobei $R^2 = R^3$ = Wasserstoff ausgeschlossen ist.

10. Verfahren gemäss Anspruch 8, dadurch gekennzeichnet, dass $R^1$ ein einfach bzw. zweifach olefinisch ungesättigter, geradkettiger Kohlenwasserstoffrest mit 16, 18 oder 20 C-Atomen ist, während $R^2$ und $R^3$ gleich oder verschieden sein können und einen geradkettigen oder verzweigten Kohlenwasserstoffrest mit 1 bis 3 C-Atomen oder ein Wasserstoffatom bedeuten, wobei $R^2 = R^3$ = Wasserstoff ausgeschlossen ist.

**Revendications pour les Etats contractants: BE, CH, LI, DE, FR, GB, IT, LU, NL, SE**

1. O-alcoyl-O-carbamoyl-glycéro- phosphocholines de formules générales I ou II

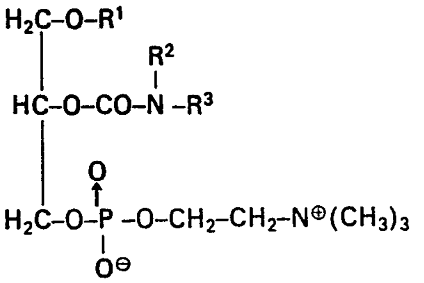

I

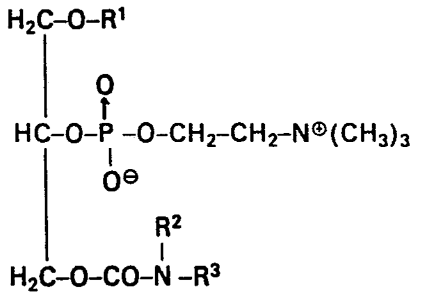

II

où

$R^1$ représente un radical hydrocarboné à chaîne droite, saturé ou saturé en C10 à C20,

$R^2$ et $R^3$ peuvent être semblables ou différents et représentent un radical hydrocarboné à chaîne droite ou ramifiée, saturé ou non saturé en C1 à C20 ou un atome d'hydrogène, où $R^2 = R^3$ = hydrogène est exclu.

2. 1-O-alcoyl-2-O-carbamoyl-glycéro-3-phosphocholines de formule générale I, où $R^1$ représente un radical hydrocarboné sature à chaîne droite en C10 à C20, $R^2$ représente un atome d'hydrogène et $R^3$ représente un radical hydrocarboné à chaine droite ou ramifiée en C1 à C9.

3. 1-O-alcoyl-2-O-carbamoyl-glycéro-3-phosphocholines selon la revendication 2, caractérisé en ce que $R^1$ est un radical hydrocarboné saturé à chaîne droite en C16, C18 ou C20, tandis que $R^2$ représente un atome d'hydrogène et $R^3$ un radical méthyle, éthyle ou isopropyle.

4. 1-O-alcoyl-3-O-carbamoyl-glycéro-2-phosphocholines de formule générale II, où $R^1$ représente un radical hydrocarboné à chaîne droite, saturé ou non saturé, en C10 à C20, tandis que $R^2$ et $R^3$ peuvent être semblables ou différents et représentent un radical hydrocarboné à chaîne droite ou ramifiée en C1 à C6 ou un atome d'hydrogène, où $R^2 = R^3$ = hydrogène est exclu.

5. 1-O-alcoyl-3-O-carbamoyl-glycéro-2-phosphocholines selon la revendication 4, caractérisées en ce que $R^1$ est un radical hydrocarboné saturé à chaîne droite en C16, C18 ou C20, tandis que $R^2$ et $R^3$ peuvent être semblables ou différents et représentent un radical hydrocarboné à chaîne droite ou ramifiée en C1 à C3 ou un atome d'hydrogène, où $R^2 = R^3$ = hydrogène est exclu.

6. 1-O-alcoyl-3-O-carbamoyl-glycéro-2-phosphocholines selon la revendication 4, caractérisées en ce que $R^1$ est un radical hydrocarboné à chaîne droite, mono- ou di-oléfiniquement non saturé en C16, C18 ou C20, tandis que $R^2$ et $R^3$ peuvent être semblables ou différents et représentent un radical hydrocarboné à chaîne droite ou ramifiée en C1 à C3 ou un atome d'hydrogène, où $R^2 = R^3$ = hydrogène.

7. 1-O-alcoyl-2-O-carbamoyl-glycéro-3-phosphocholines de formule générale I, où $R^1$ représente un radical hydrocarboné saturé à chaîne droite en C10 à C20, $R^2$ représente un atome d'hydrogène et $R^3$ représente un radical hydrocarboné saturé à chaîne droite en C10 à C20, où $R^1$ et $R^3$ peuvent être semblables ou différents.

8. 1-O-alcoyl-2-O-carbamoyl-glycéro-3-phosphocholines selon la revendication caractérisées en ce que $R^1$ et $R^3$ représentent un radical hydrocarboné saturé à chaîne droite en C16 ou C18, où $R^1$ et $R^3$ peuvent être semblables ou différents.

9. 1-O-alcoyl-3-O-carbamoyl-glycéro-2-phosphocholines de formule générale II, où $R^1$ représente un radical hydrocarboné à chaîne droite saturé ou non saturé en C10 à C20, $R^2$ représente un atome d'hydrogène et $R^3$ représente un radical hydrocarboné à chaîne droite saturé ou non saturé en C10 à C20, où $R^1$ et $R^3$ peuvent être semblables ou différents.

10. 1-O- alcoyl- 3-O- carbamoyl- glycéro-2-phosphocholines selon la revendication 9, caractérisées en ce que $R^1$ et $R^3$ représentent un radical hydrocarboné à chaîne droite saturé ou non saturé en C16 ou C18, où $R^1$ et $R^3$ peuvent être semblables ou différents.

11. Procédé de préparation de composés de formule I selon les revendications 1, 2, 3, 7 et 8, caractérisé en ce qu'on fait réagir des lysocomposés de formule générale III

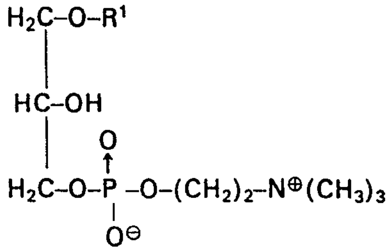

III

où $R^1$ a la signification donnée dans la formule I, dans un solvant organique aprotique éventuellement avec addition d'une base de Lewis comme catalyseur avec l'alcoylisocyanate correspondant ou son imidazolide.

12. Procédé de préparation de composés de formule II selon les revendications 1, 4, 5, 6, 9 et 10, caractérisé en ce qu'on fait réagir des lysocomposés de formule générale IV

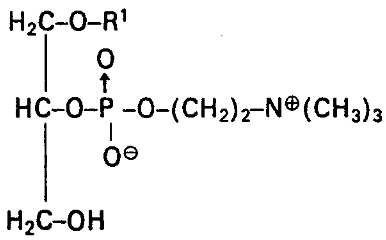

IV

où $R^1$ a la signification donnée dans la formule II, dans un solvant organique aprotique, éventuellement avec addition d'une base de Lewis comme catalyseur avec l'alcoylisocyanate correspondant ou son imidazolide.

13. Procédé de préparation de composés de formule II selon les revendications 1, 4, 5 et 6, caractérisé en ce qu'on fait réagir des lysocomposés de formule IV dans un solvant organique indifférent, éventuellement avec addition d'un accepteur d'acide, avec les chlorures d'acide carbamidinique correspondants de formule V,

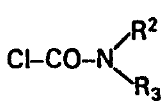

V

où $R^2$ et $R^3$ ont les significations données dans la formule II.

**Revendications pour l'Etat contractant: AT**

1. Procédé de préparation de composés de formule I

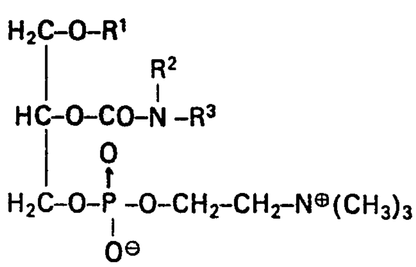

I

où $R^2$ représente un radical hydrocarboné à chaîne droite, saturé ou non saturé en C10 à C20,

$R^2$ et $R^3$ peuvent être semblables ou différents et représentent un radical hydrocarboné à chaîne droite ou ramifiée, saturé ou non saturé en C1 à C20 ou un atome d'hydrogène, où $R^2$ = $R^3$ = hydrogène est exclu, caractérisé en ce qu'on fait réagir des lysocomposés de formule générale III

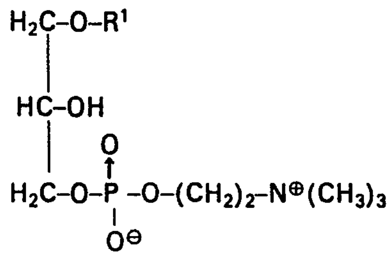

III

où $R^1$ a la signification donnée dans la revendication 1, dans un solvant organique aprotique, éventuellement avec addition d'une base de Lewis comme catalyseur avec l'alcoylisocyanate de formule $R^3$–NCO ou son imidazolide.

2. Procédé selon la revendication 1, caractérisé en ce que $R^1$ représente un radical hydrocarboné saturé à chaîne droite en C10 à C20 et $R^3$ représente un radical hydrocarboné à chaîne droite ou ramifiée en C1 à C9.

3. Procédé selon la revendication 1, caractérisé en ce que $R^1$ représente un radical hydrocarboné saturé en C16, C18 ou C20, tandis que $R^3$ représente un radical méthyle, éthyle ou isopropyle.

4. Procédé selon la revendication 1, caractérisé en ce que $R^1$ représente un radical hydrocarboné saturé à chaîne droite en C10 à C20 et $R^3$ représente un radical hydrocarboné saturé à chaîne droite en C10 à C20, où $R^1$ et $R^3$ peuvent être semblables ou différents.

5. Procédé selon la revendication 1, caractérisé en ce que $R^1$ et $R^3$ représentent un radical hydrocarboné saturé à chaîne droite en C16 ou C18, où $R^1$ et $R^3$ peuvent être semblables ou différents.

6. Procédé de préparation de composés de formule II

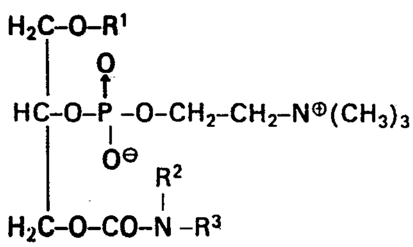

II

où $R^1$ représente un radical hydrocarboné à chaîne droite, saturé ou non saturé, en C10 à C20, $R^2$ et $R^3$ peuvent être semblables ou différents et représentent un radical hydrocarboné à chaîne droite ou ramifiée saturé ou non saturé en C1 à C20 ou un atome d'hydrogène, où $R^2$ = $R^3$ = hydrogène est exclu, caractérisé en ce qu'on fait réagir des lysocomposés de formule générale IV

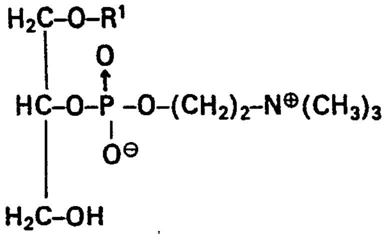 IV

où $R^1$ a la signification donnée dans la formule II, dans un solvant organique aprotique, éventuellement avec addition d'une base de Lewis comme catalyseur avec l'alcoylisocyanate correspondant de formule $R^3$–NCO ou son imidazolide.

7. Procédé de préparation de composés de formule II selon la revendication 1, caractérisé en ce qu'on fait réagir des lysocomposés de formule IV dans un solvant organique indifférent, éventuellement avec addition d'un accepteur d'acide, avec les chlorures d'acide carbamidinique correspondants de formule V.

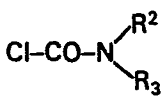 V

où $R^2$ et $R^3$ ont la signification donnée dans la formule II.

8. Procédé selon les revendications 6 et 7, caractérisé en ce que $R^1$ représente un radical hydrocarboné à chaîne droite saturé ou non saturé en C10 à C20, tandis que $R^2$ et $R^3$ peuvent être semblables ou différents et représentent un radical hydrocarboné à chaîne droite ou ramifiée en C1 à C6 ou un atome d'hydrogène, où $R^2 = R^3$ = hydrogène est exclu.

9. Procédé selon la revendication 8, caractérisé en ce que $R^1$ est un radical hydrocarboné à chaîne droite saturé en C16, C18 ou C20, tandis que $R^2$ et $R^3$ peuvent être semblables ou différents et représentent un radical hydrocarboné à chaîne droite ou ramifiée en C1 à C3 ou un atome d'hydrogène, où $R^2 = R^3$ = hydrogène est exclu.

10. Procédé selon la revendication 8, caractérisé en ce que $R^1$ est un radical hydrocarboné à chaîne droite mono- ou di-oléfiniquement non saturé en C16, C18 ou C20, tandis que $R^2$ et $R^3$ peuvent être semblables ou différents et représentent un radical hydrocarboné à chaîne droite ou ramifiée en C1 à C3 ou un atome d'hydrogène, où $R^2 = R^3$ = hydrogène est exclu.

**Claims for the contracting States: BE, CH, LI, DE, FR, GB, IT, LU, NL, SE**

1. O-Alkyl-O-carbamoylglycerophosphocholines of the general formulae I or II

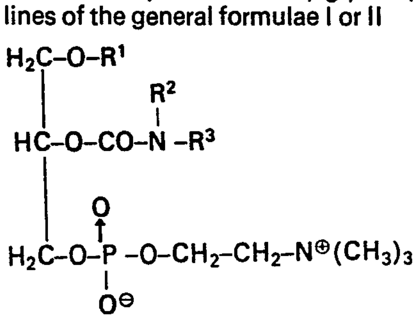 I

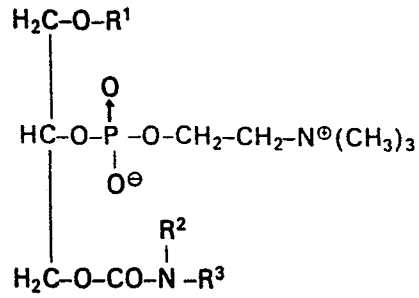 II

wherein $R^1$ denotes a straight-chain, saturated or unsaturated hydrocarbon radical having 10 to 20 C atoms, and $R^2$ and $R^3$ can be identical or different and denote a straight-chain or branched, saturated or unsaturated hydrocarbon radical having 1 to 20 C atoms, or a hydrogen atom, excluding compounds where $R^2 = R^3$ = hydrogen.

2. 1-O-Alkyl-2-O-carbamoylglycero-3- phosphocholines of the general formula I wherein $R^1$ denotes a straight-chain, saturated hydrocarbon radical having 10 to 20 C atoms, $R^2$ denotes a hydrogen atom and $R^3$ denotes a straight-chain or branched hydrocarbon radical having 1 to 9 C atoms.

3. 1-O-Alkyl-2-O-carbamoylglycero-3- phosphocholines according to claim 2, characterised in that $R^1$ is a straight-chain, saturated hydrocarbon radical having 16, 18 or 20 C atoms while $R^2$ denotes a hydrogen atom and $R^3$ denotes a methyl, ethyl or isopropyl radical.

4. 1-O-Alkyl-3-O-carbamoylglycero-2- phosphocholines of the general formula II wherein $R^1$ is a straight-chain, saturated or unsaturated hydrocarbon radical having 10 to 20 C atoms, while $R^2$ and $R^3$ can be identical or different and denote a straight-chain or branched hydrocarbon radical having 1 to 6 C atoms, or a hydrogen atom, excluding compounds where $R^2 = R^3$ = hydrogen.

5. 1-O-Alkyl-3-O-carbamoylglycero-2- phosphocholines according to claim 4, characterised in that $R^1$ is a straight-chain, saturated hydrocarbon radical having 16, 18 or 20 C atoms, while $R^2$ and $R^3$ can be identical or different and denote a straight-chain or branched hydrocarbon radical having 1 to 3 C atoms, or a hydrogen atom, excluding compounds where $R^2 = R^3$ = hydrogen.

6. 1-O-Alkyl-3-O-carbamoylglycero-2-phosphocholines according to claim 4, characterised in that $R^1$ is a straight-chain hydrocarbon radical which has monoolefinic or diolefinic unsaturation and has 16, 18 or 20 C atoms, while $R^2$ and $R^3$ can be identical or different and denote a straight-chain or branched hydrocarbon radical having 1 to 3 C atoms, or a hydrogen atom, excluding compounds where $R^2 = R^3$ = hydrogen.

7. 1-O-Alkyl-2-O-carbamoylglycero-3- phosphocholines of the general formula I wherein $R^1$ denotes a straight-chain, saturated radical having 10 to 20 C atoms, $R^2$ denotes a hydrogen atom and $R^3$ denotes a straight-chain, saturated hydrocarbon radical having 10 to 20 C atoms, it being possible for $R^1$ and $R^3$ to be identical or different.

8. 1-O-Alkyl-2-O-carbamoylglycero-3- phosphocholines according to claim 7, characterised

in that $R^1$ and $R^3$ denote a straight-chain, saturated hydrocarbon radical having 16 or 18 C atoms, it being possible for $R^1$ and $R^3$ to be identical or different.

9. 1-O-Alkyl-3-O-carbamoylglycero-2- phosphocholines of the general formula II wherein $R^1$ is a straight-chain, saturated or unsaturated hydrocarbon radical having 10 to 20 C atoms, $R^2$ denotes a hydrogen atom and $R^3$ denotes a straight-chain, saturated or unsaturated hydrocarbon radical having 10 to 20 C atoms, it being possible for $R^1$ and $R^3$ to be identical or different.

10. 1-O- Alkyl -3-O- carbamoylglycero-2-phosphocholines according to claim 9, characterised in that $R^1$ and $R^3$ denote a straight-chain, saturated or unsaturated hydrocarbon radical having 16 or 18 C atoms, it being possible for $R^1$ and $R^3$ to be identical or different.

11. Process for the preparation of compounds of the formula I according to claims 1, 2, 3, 7 and 8, characterised in that lyso compounds of the general formula III

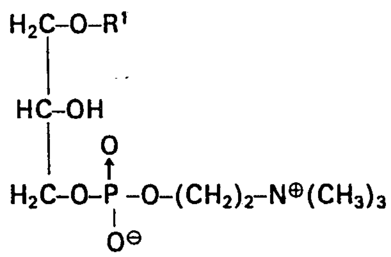

III

in which $R^1$ has the meaning indicated in formula I, are reacted, in an aprotic organic solvent, if appropriate with the addition of a Lewis base as catalyst, with the appropriate alkyl isocyanate or the imidazolide thereof.

12. Process for the preparation of compounds of the formula II according to claims 1, 4, 5, 6, 9 and 10, characterised in that lyso compounds of the general formula IV

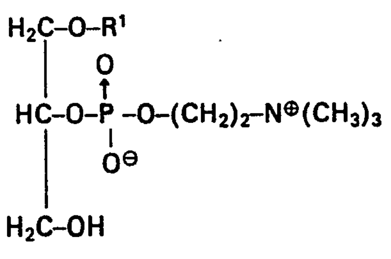

IV

in which $R^1$ has the meaning indicated in formula II, are reacted, in an aprotic organic solvent, if appropriate with the addition of a Lewis base as catalyst, with the appropriate alkyl isocyanate or the imidazolide thereof.

13. Process for the preparation of compounds of the formula II according to claims 1, 4, 5 and 6, characterised in that lyso compounds of the formula IV are reacted, in an inert, organic solvent, if appropriate with the addition of an acid acceptor, with the appropriate carbamoyl chlorides of the formula V

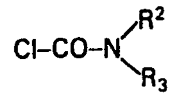

V

in which $R^2$ and $R^3$ have the meanings indicated in formula II.

**Claims for the Contracting State: AT**

1. Process for the preparation of compounds of formula I

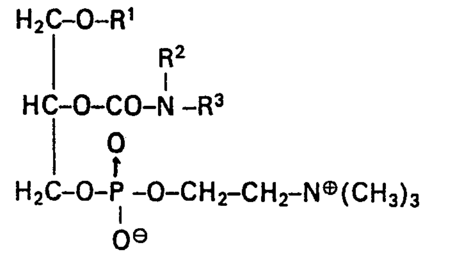

I

wherein $R^1$ denotes a straight-chain, saturated or unsaturated hydrocarbon radical having 10 to 20 C atoms, and $R^2$ and $R^3$ can be identical or different and denote a straight-chain or branched saturated or unsaturated hydrocarbon radical having 1 to 20 C atoms or hydrogen, excluding compounds where $R^2 = R^3 =$ hydrogen, characterised in that lyso compounds of the general formula III

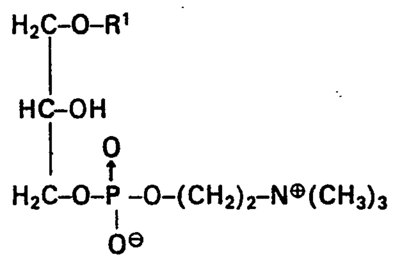

III

in which $R^1$ has the meaning indicated in formula I, are reacted, in an aprotic organic solvent, if appropriate with the addition of a Lewis base as catalyst, with the appropriate alkyl isocyanate of formula $R^3$–NCO or the imidazolide thereof.

2. Process according to claim 1, characterised in that $R^1$ is a straight-chain saturated hydrocarbon radical having 10 to 20 C atoms and $R^3$ is a straight-chain or branched hydrocarbon radical having 1 to 9 C atoms.

3. Process according to claim 1, characterised in that $R^1$ is a straight-chain saturated hydrocarbon radical having 16, 18 or 20 C atoms while $R^3$ is a methyl, ethyl or isopropyl group.

4. Process according to claim 1, characterised in that $R^1$ is a straight-chain saturated hydrocarbon radical having 10 to 20 C atoms and $R^3$ is a straight-chain, saturated hydrocarbon radical with 10 to 20 C atoms while $R^1$ and $R^3$ can be identical or different.

5. Process according to claim 1, characterised in that $R^1$ and $R^3$ represent a straight-chain saturated hydrocarbon radical with 16 or 18 C atoms while $R^1$ and $R^3$ may be identical or different.

6. Process for the preparation of compounds of formula II

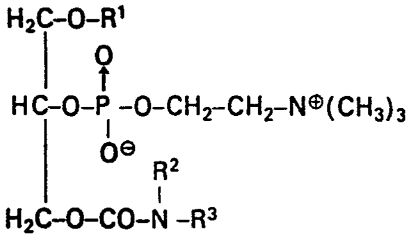

II

wherein $R^1$ is a straight-chain saturated or unsaturated hydrocarbon radical having 10 to 20 C atoms, $R^2$ and $R^3$ may be same or different and represent straight-chain or branched, saturated or unsaturated hydrocarbon radicals with 1 to 20 C atoms or a hydrogen atom, excluding $R^2 = R^3 =$ hydrogen, characterised in that lyso compounds of the general formula IV

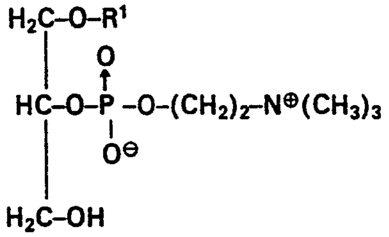

IV

in which $R^1$ has the meaning indicated in formula II, is subjected to reaction, in an aprotic organic solvent, if propriate with the addition of a Lewis base as catalyst, with the appropriate alkyl isocyanate of formula $R^3$–NCO or the imidazolide thereof.

7. Process for the preparation of compounds of formula II according to claim 1 characterised in that lyso compounds of formula IV are reacted in an inert organic solvent, if appropriate with the addition of an acid acceptor, with the appropriate carbamoyl acid chlorides of formula V,

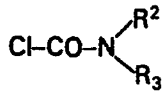

V

in which $R^2$ and $R^3$ have the meanings indicated in formula II.

8. Process according to claim 6 to 7 characterised in that $R^1$ is a straight-chain, saturated or unsaturated hydrocarbon radical with 10 to 20 C atoms while $R^2$ and $R^3$ may be identical or different and represent a straight or branched hydrocarbon radical with 1 to 6 C atoms or a hydrogen, excluding $R^2 = R^3 =$ hydrogen.

9. Process according to claim 8 characterised in that $R^1$ is a straight-chain saturated hydrocarbon radical with 16, 18 or 20 C atoms while $R^2$ and $R^3$ may be identical or different and represent a straight-chain or branched hydrocarbon radical with 1 to 3 C atoms or a hydrogen excluding $R^2 = R^3 =$ hydrogen.

10. Process according to claim 8 characterised in that $R^1$ is a monoolefinically or de-olefinically unsaturated straight-chain hydrocarbon radical with 16, 18 or 20 C atoms while $R^2$ and $R^3$ may be identical or different and represent a straight or branched hydrocarbon radical with 1 to 3 C atoms or a hydrogen, excluding $R^2 = R^3 =$ hydrogen.